# FASCICULE DE BREVET EUROPEEN

(11) **EP 0 337 374 B1**
(45) Date de publication et mention de la délivrance du brevet: **17.03.1993**
(21) Numéro de dépôt: 89106366.1
(22) Date de dépôt: 11.04.1989
(51) Int. Cl.: C08L 23/16, C08L 23/06, C08L 83/04, C08F 255/00, H01B 3/44

(54) **Matériau isolant électrique compact pour revêtement de structure isolante**
Kompaktes elektrisches Isoliermaterial zu isolierenden Überzügen
Compact electrical insulating material for insulating coatings

(30) Priorité: 15.04.1988 FR 8805030
(43) Date de publication de la demande: 18.10.1989
(73) Titulaire: SEDIVER, SOCIETE EUROPEENNE D'ISOLATEURS EN VERRE ET COMPOSITE, F-92411 Courbevoie (FR)
(72) Inventeur: Beys, Jean-Claude Résidence Valerie - D3, F-63200 Riom (FR); Maucolot, Michel, F-91620 Nozay (FR); Parraud, René, F-63290 Puy Guillaume (FR); Prigent, Madeleine, F-91460 Marcoussis (FR)
(74) Mandataire: Weinmiller, Jürgen

(56) Documents cités:
- EP-A- 0 035 108
- EP-A- 0 040 468
- DE-A- 2 303 624
- US-A- 3 795 646
- US-A- 4 424 181
- US-A- 4 731 406

## Description

La présente invention concerne un matériau isolant électrique compact pour revêtement de structure isolante qui a à la fois une fonction mécanique et une fonction électrique, telle que isolateur, traversée, extrémité de câble, parafoudre... Une telle structure sert à isoler un élément conducteur de la masse, ou d'un autre élément conducteur, ou de tout autre objet.

On connaît actuellement pour les revêtements électriques isolants en élastomère essentiellement deux types de matériaux destinés à être mis en forme par moulage.

Le premier type de matériau est à base de polyorganosiloxane. Il s'agit d'un matériau qui conserve durablement ses propriétés hydrophobes, mais qui présente une mauvaise tenue à l'érosion due aux arcs sous forte pollution.
Son inconvénient essentiel est sa fragilité mécanique, c'est-à-dire sa faible contrainte à la rupture et sa mauvaise tenue au déchirement, ce qui pose des problèmes lors de sa mise en oeuvre et lors de la manutention des pièces finies. De plus ce matériau est relativement coûteux.

Le second type de matériau est un caoutchouc organique synthétique à base de polyéthylène ou de copolymère d'éthylène, tel que les E.P.D.M. (Ethylène - Propylène - Diène - Monomère), ou les E.P.R. (Ethylène -Propylène - Rubber). Son coût est très inférieur à celui du matériau à base de polyorganosiloxane et ses valeurs de contrainte à la rupture et de tenue au déchirement sont élevées. Toutefois, en service, le mécanisme de contournement devient identique à celui des isolants minéraux, suite à la réduction de ses propriétés hydrophobes de départ.

On connaît par ailleurs par les brevets US-A-4.390.656 et US-A 4.548.979 des matériaux comportant un mélange d'un élastomère de type EPDM, EPR ou copolymère d'éthylène avec un polyorganosiloxane et des ajouts à base d'oxydes de terres rares ou de graphite, conférant à ces matériaux des propriétés particulières d'ignifugation. Ils peuvent être éventuellement réticulés. Leur composition est telle qu'ils ont de bonnes propriétés d'isolement électrique, mais leur tenue à l'érosion sous arc électrique et leur tenue au cheminement sont tout à fait insuffisantes ; ils ne peuvent être envisagés pour les applications prévues plus haut.

Le brevet US-A-4 731 406 se réfère à un caoutchouc à base de EPDM et de silicone, particulièrement résistant à la flamme et ne dégageant que très peu de gaz toxiques en cas d'incendie, mais sa composition est telle qu'il présente une hydrophobicité insuffisante pour les applications visées par la présente demande.

Enfin la demande de brevet européen EP-A-040 468 divulgue un matériau également à base d'EPDM et de silicone présentant une adhérence améliorée sur des parties métalliques ou sur un autre silicone, mais les compositions décrites n'ont pas les qualités requises du point de vue tenue à l'érosion ou au cheminement des arcs.

La présente invention a pour but de réaliser un matériau, notamment pour revêtement d'isolateur électrique, présentant des valeurs de contrainte à la rupture et au déchirement élevées et conservant durablement ses propriétés hydrophobes.

La présente invention a pour objet un matériau isolant électrique compact pour revêtement de structure isolante ayant à la fois une fonction mécanique et une fonction électrique, contenant :
- un premier élastomère de type EPDM, EPR ou copolymère d'éthylène,
- un polyorganosiloxane sous forme élastomère,
- un agent de coréticulation, tel qu'un peroxyde ayant une température de décomposition compatible avec la mise en oeuvre dudit matériau, dans une proportion comprise entre 1 et 10 pcr, caractérisé par le fait qu'il contient en outre
- une charge minérale à base de trihydrate d'alumine dans une proportion comprise entre 190 et 250 pcr,
- un monomère contenant des groupements di ou triallyliques dans une proportion comprise entre 0,2 et 5 pcr, et par le fait que la proportion de polyorganosiloxane est comprise entre 5 % et 40 % en poids dudit premier élastomère.
(La mention pcr signifie partie pour cent de "rubber"). On constate que le matériau selon l'invention a à la fois d'excellentes propriétés mécaniques, du point de vue de la tenue au déchirement et à la déformation, et une bonne tenue aux arcs électriques et au cheminement.

Parmi les élastomères, on utilise de préférence des caoutchoucs d'éthylène - propylène ou des terpolymères d'éthylène - propylène contenant un diène. Leur dureté Shore est avantageusement de l'ordre de 60.

Le polyorganosiloxane comporte de préférence des doubles liaisons vinyliques et sa dureté Shore est de préférence de l'ordre de 35.

Ledit monomère contenant des groupements di ou triallyliques est par exemple de type triallylcyanurate, diallylmaléate, diallylphtalate.

Comme agent de coréticulation on utilise du peroxyde de dicumyle.

D'autres caractéristiques et avantages de la présente invention apparaîtront au cours de la description suivante de modes de réalisation donnés à titre illustratif, mais non limitatif.

On s'intéresse tout d'abord au caoutchouc silicone de l'art antérieur qui contient un taux de trihydrate d'alumine de 140 pcr. Afin d'accroître les performances électriques de ce matériau sous forte pollution, on accroît son pourcentage en trihydrate d'alumine, mais cela entraîne une dégradation de sa tenue au déchirement déjà faible, comme le montre le tableau I ci-dessous.

**TABLEAU I**

| Taux de Al (OH)₃ (pcr) | 80 | 100 | 120 | 140 | 160 |
|---|---|---|---|---|---|
| Résistance au (daN/cm) déchirement | 21 | 20,2 | 19,1 | 16 | 15 |

Il est donc impossible d'accroître notablement le taux de trihydrate d'alumine dans le caoutchouc silicone ; il convient de limiter ce taux à 140 pcr.

On va comparer ci-dessous les propriétés mécaniques et électriques :
- d'un caoutchouc EPDM de l'art antérieur contenant une charge de 230 pcr de trihydrate d'alumine,
- d'un caoutchouc à base de polysiloxane de l'art antérieur contenant une charge de 140 pcr de trihydrate d'alumine,
- d'un matériau selon l'invention contenant une charge de 230 pcr de trihydrate d'alumine,
- d'un matériau selon l'invention contenant de l'EPDM et du polysiloxane comme le matériau précédent, mais avec une charge de trihydrate d'alumine de 190 pcr.

Le matériau I selon l'invention est réalisé à partir des éléments suivants :
- un élastomère d'éthylène - propylène dont le pourcentage d'éthylène est de 60% ; cet élastomère a une distribution moléculaire large et comporte environ 5% de diène ; sa dureté Shore est voisine de 60.
- un polydiméthylsiloxane de dureté Shore de l'ordre de 35, comportant des doubles liaisons vinyliques ; sa proportion est de 20% du poids de l'élastomère précédent.
- du trihydrate d'alumine : 230 pcr
- du triallylcyanurate : 1 pcr
- du peroxyde de dicumyle : 8 pcr
- de petites quantités d'agents couramment utilisés dans ce domaine, tels que huile paraffinique, agents anti-oxydants, agents anti UV...

Dans le processus de mélange des constituants précités et du moulage proprement dit, toutes les conditions sont habituelles et la covulcanisation se fait parfaitement.

Les propriétés du produit de revêtement obtenu sont tout à fait surprenantes. Le tableau II suivant mentionne des valeurs de résistance à la rupture (Norme NF 51034), d'allongement à la rupture, de résistance au déchirement (Norme NF 46007 méthode A), un essai de type wheeltest décrit dans le document IEEE. M. KURTZ "Comparison of tracking test methods Transaction on electrical insulation -June 1971, Vol EI6, n° 2", et un résultat de mesure d'hydrophobicité.

Le tableau II comporte également des valeurs relatives à une variante de matériau selon l'invention ; ce matériau II contient 190 pcr de trihydrate d'alumine. Ses propriétés mécaniques sont un peu moins bonnes que celles du matériau contenant d'avantage de trihydrate d'alumine, mais elles sont encore tout à fait satisfaisantes pour les applications envisagées.

**TABLEAU II**

| Nature de l'essai | Unité | E.P.D.M. | Polyorganosiloxane | Matériau I selon l'invention | Matériau II selon l'invention |
|---|---|---|---|---|---|
| Résistance à la rupture (R/R) | Bar | 94 | 37 | 109 | 85 |
| Allongement à la rupture | % | 245 | 325 | 210 | 245 |
| Résistance au déchirement | daN/cm | 26 | 16 | 28 | 23 |
| Erosion Wheeltest | | négligeable | forte | négligeable | négligeable |
| Hydrophobicité après 2000 heures au weatheromètre | | réduite | bonne | bonne | bonne |

Les propriétés mécaniques du matériau selon l'invention n'évoluent par après un vieillissement thermique de 1500 heures à 100° C.

Ce matériau se moule sans difficultés par injection et ne pose aucun problème au niveau du raccord des flux. L'ensemble de ses propriétés prouve qu'il possède une parfaite homogénéité.

On note par ailleurs que ce matériau vieilli pendant 2000 heures au weatheromètre ne présente aucune fissuration caractéristique d'un vieillissement prématuré. Il présente après ce test des propriétés d'hydrophobicité semblables à celles d'un caoutchouc silicone. Ces propriétés d'hydrophobicité sont essentielles pour l'application du revêtement aux isolateurs électriques dans la mesure où elles conditionnent la tenue au contournement en atmosphère polluée.

On observe une synergie des propriétés des deux élastomères entrant dans la composition du matériau selon l'invention.

Bien entendu, l'invention n'est pas limitée par l'exemple qui vient d'être décrit ; les proportions des différents constituants pourront varier dans les limites indiquées plus haut.

Ce matériau s'applique notamment aux isolateurs électriques organiques, aux parafoudres, aux traversées, aux extrémités de câbles, aux écarteurs de phase, aux supports et enveloppes isolants et tout appareillage électrique auquel il est demandé une fonction électrique et une fonction mécanique.

## Revendications

1. Matériau isolant électrique compact pour revêtement de structure isolante ayant à la fois une fonction mécanique et une fonction électrique, contenant un premier élastomère de type EPDM, EPR ou copolymère d'éthylène, un polyorganosiloxane sous forme d'élastomère et un agent de coréticulation, tel qu'un peroxyde ayant une température de décomposition compatible avec la mise en oeuvre dudit matériau, dans une proportion comprise entre 1 et 10 pcr, caractérisé par le fait qu'il contient en outre une charge minérale à base de trihydrate d'alumine dans une proportion comprise entre 190 et 250 pcr, et un monomère contenant les groupements di ou triallyliques dans une proportion comprise entre 0,2 et 5 pcr, et par le fait que la proportion de polyorganosiloxane est comprise entre 5 % et 40 % en poids dudit premier élastomère .

2. Matériau isolant électrique selon la revendication 1, caractérisé par le fait que la dureté Shore dudit premier élastomère est de l'ordre de 60.

3. Matériau isolant électrique selon l'une des revendications 1 et 2, caractérisé par le fait que ledit polyorganosiloxane comporte des doubles liaisons vinyliques.

4. Matériau isolant électrique selon l'une des revendications 1 à 3, caractérisé par le fait que ledit polyorganosiloxane présente une dureté Shore de l'ordre de 35.

5. Matériau selon la revendication 1, caractérisé par le fait que ledit monomère contenant des groupements di ou triallyliques est du type triallylcyanurate, diallylmaléate, diallylphtalate.

6. Matériau selon la revendication 1, caractérisé par le fait que ledit peroxyde est du peroxyde de dicumyle.

## Claims

1. A compact electrically insulating material for coating an insulating structure for performing both a mechanical function and an electrical function, the material containing a first elastomer of the EPDM, EPR, or ethylene copolymer type, a polyorganosiloxane in the form of an elastomer, a co-cross-linking agent such as a peroxide at a concentration lying in the range 1 pcr to 10 pcr and having a decomposition temperature compatible with the intended use of said material, characterized in that it also contains an inorganic filler based on alumina trihydrate at a concentration lying in the range 190 to 250 pcr, and a monomer containing di- or tri-allyl groups at a concentration lying in the range 0.2 to 5 pcr, and by the fact that the concentration of the polyorganosiloxane lies in the range 5% to 40% by weight of said first elastomer.

2. An electrically insulating material according to claim 1, characterized in that the Shore hardness of said first elastomer is about 60.

3. An electrically insulating material according to claim 1 or 2, characterized in that said polyorganosiloxane includes vinyl double bonds.

4. An electrically insulating material according to any one of claims 1 to 3, characterized in that said polyorganosiloxane has a Shore hardness of about 35.

5. A material according to claim 1, characterized in that said monomer containing the di- or tri-allyl groups is one of the following types: triallyl cyanurate; diallyl maleate; diallyl phthalate.

6. A material according to claim 1, characterized in that said peroxide is dicumyl peroxide.

## Patentansprüche

1. Kompaktes elektrisches Isoliermaterial für die Beschichtung einer Isolierstruktur, das sowohl eine mechanische als auch eine elektrische Funktion besitzt und ein erstes Elastomermaterial vom Typ EPDM, EPR oder Äthylencopolymer, ein Polyorganosiloxan in Elastomerform und ein Vernetzungsmittel wie z.B. ein Peroxid mit einer Zersetzungstemperatur, die mit der Anwendung des Materials kompatibel ist, enthält, wobei dieses Mittel einen Anteil zwischen 1 und 10 pcr besitzt, dadurch gekennzeichnet, daß es weiter eine mineralische Beigabe auf der Basis von Aluminiumoxid-Trihydrat mit einem Anteil zwischen 190 und 250 pcr sowie ein Monomer mit Di- oder Triallylgruppen in einem Anteil zwischen 0,2 und 5 pcr aufweist, und dadurch, daß der Anteil von Polyorganosiloxan zwischen 5 und 40 Gew.% des ersten Elastomers gewählt ist.

2. Elektrisches Isoliermaterial nach Anspruch 1, dadurch gekennzeichnet, daß die Shore-Härte des ersten Elastomers bei etwa 60 liegt.

3. Elektrisches Isoliermaterial nach einem der Ansprüche 1 und 2, dadurch gekennzeichnet, daß das Polyorganosiloxan Vinyldoppelbindungen besitzt.

4. Elektrisches Isoliermaterial nach einem der Ansprüche 1 bis 3, dadurch gekennzeichnet, daß das Polyorganosiloxan eine Härte nach Shore von etwa 35 besitzt.

5. Material nach Anspruch 1, dadurch gekennzeichnet, daß das Monomer, das Di- oder Triallylgruppen enthält, vom Typ Triallylcianurat, Diallylmaleat, Diallylphthalat ist.

6. Material nach Anspruch 1, dadurch gekennzeichnet, daß als Peroxid Dicumylperoxid verwendet wird.
